# EUROPÄISCHE PATENTSCHRIFT

(11) **EP 1 086 016 B1**
(45) Veröffentlichungstag und Bekanntmachung des Hinweises auf die Patenterteilung: **07.05.2003**
(21) Anmeldenummer: 99924998.0
(22) Anmeldetag: 17.05.1999
(51) Int. Cl.: B64D 43/02, G08B 25/10

(54) **VORRICHTUNG ZUR ERZEUGUNG EINES WARNSIGNALS, INSBESONDERE FÜR HELIKOPTER**
DEVICE FOR GENERATING A WARNING SIGNAL, ESPECIALLY FOR HELICOPTERS
DISPOSITIF POUR PRODUIRE UN SIGNAL D'AVERTISSEMENT, EN PARTICULIER POUR HELICOPTERE

(30) Priorität: 15.05.1998 DE 19822017
(43) Veröffentlichungstag der Anmeldung: 28.03.2001
(73) Patentinhaber: Deep Blue Technology AG, 5600 Lenzburg (CH)
(72) Erfinder: RUCHTI, Heinz, CH-5725 Leutwil (CH)
(74) Vertreter: Wallinger, Michael, Dr.-Ing.
(86) Internationale Anmeldenummer: EP9903398
(87) Internationale Veröffentlichungsnummer: WO99059868

(56) Entgegenhaltungen:
- EP-A- 0 676 733
- DE-A- 3 928 142
- GB-A- 2 263 005
- US-A- 4 115 755
- US-A- 4 855 713
- US-A- 5 166 664
- US-A- 5 182 543
- US-A- 5 257 007
- US-A- 5 727 758

## Beschreibung

Die vorliegende Erfindung betrifft eine Vorrichtung zur Erzeugung eines Warnsignals, insbesondere für Helikopterpiloten.

Die vorliegende Erfindung wird nachfolgend im wesentlichen ausschließlich am Beispiel der Erzeugung eines Warnsignals für Helikopterpiloten beschrieben.

Es wird aber darauf hingewiesen, daß diese Beschreibung die Anwendung der vorliegenden Erfindung auf andere ähnliche Bereiche in keiner Weise einschränkt, sondern daß es möglich ist, diese Erfindung auch im Zusammenhang mit anderen technischen Vorrichtungen und Gestaltungen einzusetzen, wie z. B. für andere Flugzeuge und Fluggeräte allgemein, für Kraftfahrzeuge, Lastwagen, aber auch bei der Bedienung und Überwachung von solchen Maschinen, Anlagen und Systemen, bei denen eine Bedienungskraft über eine plötzlich aufgetretene Gefahrensituation zuverlässig informiert werden muß.

Der Antrieb eines Hubschraubers erfolgt üblicherweise mit einer Brennkraftmaschine, z. B. einer Turbine, deren Ausgangswelle über ein Getriebe mit den Rotorblättern gekoppelt ist.

Da der Ausfall des Rotorantriebs unbedingt vermieden werden muß, ist es erforderlich, den Betriebszustand von Brennkraftmaschine (Turbine) und Getriebe ständig zu überwachen. Dabei muß der Pilot insbesondere dafür Sorge tragen, daß die Betriebstemperatur der Turbine einen vorbestimmten Grenzwert nicht überschreitet, und daß weiterhin das Getriebedrehmoment einen vorbestimmten Grenzwert nicht übersteigt.

Bereits eine geringfügige Überlastung des Getriebes, also beispielsweise ein Überschreiten des maximal zulässigen Drehmoments um 10 bis 15%, macht eine kostenaufwendige Überholung des Getriebes erforderlich.

Bei großen Hubschraubern ist der kollektive Blattverstellhebel, im folgenden Verstellhebel genannt, des Piloten, wie dies z. B. auch beim Steuerknüppel von Verkehrsflugzeugen üblich ist, mit einer Einrichtung versehen, welche den Piloten auf Gefahrenzustände aufmerksam macht. Diese Einrichtung führt dazu, daß der Verstellhebel zunächst leicht vibriert, wenn sich der Pilot einem gefährlichen Zustand nähert, und dann stärker geschüttelt wird, wenn ein unerlaubter Zustand erreicht wird.

Derartige Vibrationsmechanismen sind aber sehr kostenaufwendig, so daß sie, zumal in kleineren Fluggeräten, nicht verwendet werden können. Darüber hinaus nehmen sie erheblich Platz in Anspruch und unterliegen selbst strengen Sicherheitsanforderungen, da der Vibrationsmechanismus nicht zu einer Fehlfunktion des Verstellhebels führen darf.

Es ist die Aufgabe der vorliegenden Erfindung, eine Vorrichtung zur Erzeugung eines Warnsignals, insbesondere für Helikopterpiloten zu schaffen, welches einfach und kostengünstig in einen Hubschrauber, ein Flugzeug, ein Kraftfahrzeug oder ein zu überwachendes System eingebaut und integriert werden kann, und welches sich weiterhin auch dafür eignet, nachgerüstet zu werden.

Diese Aufgabe wird erfindungsgemäß durch eine Vorrichtung nach Anspruch 1 gelöst.

Zu bevorzugende Weiterbildungen der Erfindung sind Gegenstand der Unteransprüche.

Gegenüber dem bekannten Warnsystem hat die vorliegende Erfindung erhebliche Vorteile.

Die zu überwachenden Parameter, wie z. B. Betriebstemperatur und Getriebedrehmoment, werden durch elektrische Sensoren erfaßt, deren Ausgangssignal als Vergleichssignal zur Verfügung steht. In vielen Fällen liegt sogar bereits ein Alarmzustandssignal innerhalb des Meßverarbeitungssystems des entsprechenden Gerätes, also z. B. des Hubschraubers, vor, wodurch der Aufwand für die Signalerfassung und -verarbeitung noch weiter reduziert wird. Bei Verwendung vorhandener Sensoren ist eine besonders einfache und kostengünstige Nachrüstung bestehender Hubschrauber und dergleichen möglich.

Zur Verarbeitung und zur Aussendung eines solchen Signals wird eine verhältnismäßig kleinbauende elektronische Einrichtung benötigt, die problemlos in kleineren Flugzeugen usw. untergebracht werden kann. In entsprechender Weise kann die Empfangseinrichtung als kleinbauende Einrichtung gestaltet sein, die der Pilot trägt und die, durch die drahtlose Verbindung, immer mit der Sendeeinrichtung in Verbindung steht.

Durch dieses System wird insgesamt eine kleinbauende Warneinrichtung geschaffen, die den Betrieb des entsprechenden Gerätes in keiner Weise beeinträchtigt, die aber sehr zuverlässig über einen Gefahrenzustand unterrichten kann.

Der Investitionsaufwand ist, verglichen mit einer Einrichtung zur Vibration des Verstellhebels, erheblich vermindert.

Da die Warneinrichtung keine mechanische Verbindung mit dem Verstellhebel oder anderen Bauteilen des Flugzeuges aufweist, ist auch die Gefahr einer Beeinflussung der Funktion durch die Warneinrichtung nicht gegeben.

Gemäß einer bevorzugten Ausführungsform wird die Warneinrichtung, ähnlich wie eine Uhr, am Handgelenk getragen. Die Signalisierung geschieht dann vorzugsweise dadurch, daß das Gerät im Alarmzustand in Vibration versetzt wird, die den Piloten über diesen Zustand unterrichtet. Alternativ dazu können auch andere Mechanismen verwendet werden, die den Alarmzustand anzeigen, z. B. eine Erhitzung auf einen Temperaturgrenzwert, der für die Haut unschädlich ist, die Ausgabe eines kleinen Stromschlages im ungefährlichen Bereich oder dergleichen.

Eine solche Gestaltung hat erhebliche Vorteile.

Der Pilot eines Hubschraubers ist oftmals in Erfüllung seiner Aufgaben visuell und/oder akustisch erheblich abgelenkt. So hat z. B. ein Pilot, der ein kompliziertes Start- oder Landemanöver unter engen räumlichen Bedingungen ausführt, keine Zeit, gleichzeitig auf die Instrumente zu achten. Entsprechendes gilt, wenn z. B. der Pilot eines Transporthubschraubers Lasten, z. B. Masten für Stromtrassen, Skilifte u. dergl. punktgenau absetzen muß. Transporthubschrauber haben zwar z. B. ein eigenes Anzeigeinstrument für Turbinentemperatur und Getriebedrehmoment außerhalb des Helikopters, um dem nach unten schauenden Piloten die Beobachtung der Instrumente zu ermöglichen, ein solches zusätzliches Instrumentarium ist aber sehr aufwendig und beeinträchtigt letztendlich bei solchen Aufgaben auch das Blickfeld des Piloten.

Die erfindungsgemäße Warnvorrichtung stellt sicher, daß die Information des Piloten auch dann erfolgt, wenn er stark durch andere Aufgaben in Anspruch genommen ist.

Eine Warnvorrichtung der erfindungsgemäßen Art ist einer akustischen Warnvorrichtung, z. B. einer Hupe oder dergl., überlegen. Gerade bei schwierigen Aufgaben ist der Pilot akustisch durch Gespräche mit dem. Tower oder mit dem zugehörigen Arbeits- oder Bergungstrupp abgelenkt und wird deshalb das Signal nicht in allen Fällen wahrnehmen.

Eine Vorrichtung mit einem Vibrationsmechanismus oder einem entsprechenden Warnmechanismus erfordert vom Piloten keinerlei Aufmerksamkeit und lenkt ihn auch nicht von der Erfüllung der jeweiligen Aufgabe ab. Der Pilot kann sich somit auf die eigentlichen Aufgaben konzentrieren.

Unabhängig von diesen Überlegungen gibt es aber eine Ausführungsform der Erfindung, die auch eine optische Signalisierung beinhaltet.

Bei dieser Ausführungsform der Erfindung wird der Empfänger, oder zumindest eine mit dem Empfänger verbundene optische Anzeigeeinrichtung, in eine Brille, z. B. eine Sonnenbrille, integriert. Diese Anzeigeeinrichtung ist geeignet, den Piloten ohne zusätzliches Instrument und ohne Einengung seines Blickfeldes über Gefahrenzustände oder auch über Meßwerte zu informieren.

Bei einer ersten Ausführungsform ist diese Brille so gestaltet, daß im Gefahrenzustand eine oder zwei Warnlampen, vorzugsweise LEDs oder dergl., aktiviert werden. Der Pilot sieht dann im Warnzustand z. B. am oberen Rand der Brille entsprechende rote Warnlampen aufleuchten und wird über den Gefahrenzustand orientiert. Eine solche Vorrichtung warnt sehr zuverlässig, da sich die Brille naturgemäß immer im Blickfeld des Piloten befindet und damit eine Warnung des Piloten auch dann möglich ist, wenn er nicht auf die Instrumente sieht. Darüber hinaus ist das Aufleuchten einer Warnlampe in der Brille ein sehr deutlich sichtbares Signal, das der Pilot auch in den Gefahrenzuständen nicht übersehen wird. Um die Sichtbarkeit zu erhöhen, kann das Signal auch blinkend ausgestaltet werden.

Neben einer reinen Warnfunktion kann ein so gestaltetes Instrument auch weitere Funktionen übernehmen. So ist es insbesondere möglich, den Piloten nicht nur über die Gefahrensituation selbst, sondern auch über die Annäherung an diese Gefahrensituation zu unterrichten.

Bei der Verwendung einer Warnleuchte kann diese, z. B. wenn sich der Pilot um einen bestimmten Prozentsatz, z. B. 10 % oder 20 % vor einem kritischen Wert befindet, langsam anfangen zu blinken, wodurch der Pilot auf die sich abzeichnenden Gefahrensituationen hingewiesen wird. Je mehr sich der entsprechende Grenzwert dann der kritischen Grenze nähert, um so höher wird die Blinkfrequenz, so daß sich der Pilot bei der Steuerung des Hubschraubers durch die Blinkfrequenz über den zulässigen Bereich auch dann informieren kann, wenn er sich auf andere Aufgaben konzentrieren muß.

Statt der Verwendung einer Blinkfrequenz sind auch andere Maßnahmen möglich. So kann z. B. eine Farbanzeige verwendet werden, die ihre Farbe z. B. langsam von grün in rot ändert und damit die Annäherung an den Gefahrenzustand anzeigt. Weiterhin ist es z. B. möglich, die Annäherung an den Gefahrenzustand über die Anzahl der jeweils aktivierten Lichtquellen anzuzeigen. Eine erste, leuchtende oder blinkenden LED zeigt dann die Annäherung an, und es werden um so mehr LEDs zugeschaltet, bis zu einer Höchstgrenze von z. B. fünf LEDs, je mehr sich das Flugzeug der Gefahrensituation nähert.

Für die Anzeige wird man vorzugsweise, wie ausgeführt, LEDs, LCDs oder ähnliche Anzeigemittel verwenden.

In einer weiteren Ausführungsvariante sind der Empfänger und die Alarmausgabe-Einrichtung in dem Gehäuse einer Armbanduhr angeordnet. Bei Alarmausgabe werden durch Kontakte, die auf der Unterseite des Gehäuses angebracht sind und die in Kontakt mit der Haut des Benutzers stehen, kleine, ungefährliche Stromstöße abgegeben, die so vom Benutzer registriert werden.

Bei einer bevorzugten Warnvorrichtung weist die Ausgabeeinrichtung eine Anzeigeeinrichtung zum Anzeigen des Betriebszustandes auf.

Bevorzugt ist die Warnvorrichtung derart gestaltet, daß zumindest eine Steuereinrichtung und eine Überwachungssignal-Generierungseinrichtung der Überwachungssendesignal-Übertragungseinrichtung in einer ersten Mikroprozessor-Einrichtung zusammengefaßt sind, welche durch ein in einem Speicher gespeichertes Programm gesteuert ist.

Bei einer bevorzugten Warnvorrichtung weist eine Ausgabeeinrichtung eine Mikroprozessor-Einheit auf, welche durch ein Programm gesteuert ist, welches in dem in der Ausgabeeinrichtung angeordneten Speicher abgespeichert ist.

Bevorzugt ist die Warnvorrichtung derart gestaltet, daß die Übertragung des Signals bzw. der Signale von der Überwachungssendesignal-Übertragungseinrichtung zur Überwachungssendesignal-Empfangseinrichtung mittels Ultraschalls und/oder mittels elektromagnetischer Wellen, beispielsweise Runkfunkwellen, erfolgt.

In bevorzugter Gestaltung einer Warnvorrichtung erfolgt die Übertragung der Daten über eine Veränderung der Phasenlage eines sinusförmigen Signals (phase shift keying) und bevorzugt über eine differentielle Veränderung der Phasenlage (differential phase shift keying).

In bevorzugter Gestaltung einer Warnvorrichtung weist eine Überwachungssendesignal-Übertragungseinrichtung eine Zeitgebereinheit auf und ist derart gesteuert, daß die Meßeinrichtung den Zustand in vorgegebenen, festen Zeitintervallen mißt. Besonders bevorzugt ist dabei vorgesehen, daß der bei der Messung ermittelte Zustand in ein Signal umgewandelt und übertragen wird, bevor die nächste Messung erfolgt, und daß eine programmierte, intelligente Folge vorgesehen ist, welche bewirkt, daß der zeitliche Abstand zwischen der Messung und der Ausstrahlung des gemessenen Signals nicht konstant ist.

Bevorzugt überwacht die Warnvorrichtung wenigstens eine der kritischen Betriebskenngrößen einer zu überwachenden Anlage.

In bevorzugter Gestaltung einer Warnvorrichtung wird, falls eine der zu überwachenden Betriebskenngrößen einen vorbestimmten Schwellwert überschreitet, ein Warnsignal ausgelöst, wobei besonders bevorzugt die Signalstärke dieses Warnsignals von der Überschreitung eines Schwellwertes abhängt.

Vorzugsweise ist eine Warnvorrichtung derart gestaltet, daß der für die Belastung eines Getriebes maßgebliche Drehmomentkennwert und/oder der für die Belastung der Turbine(n) maßgebliche Temperaturkennwert bestimmt und überwacht wird.

Bei einer bevorzugten Warnvorrichtung erzeugt eine Ausgabeeinrichtung bei Erzeugung eines Warnsignals Vibrationen.

Bei einer bevorzugten Warnvorrichtung ist vorgesehen, daß eine Ausgabeeinrichtung physiologisch verträgliche Wärme und/oder physiologisch verträgliche Stromstöße erzeugt, die vom Benutzer bemerkt wird, wenn ein Warnsignal ausgegeben wird.

Bevorzugt ist die Warnvorrichtung derart gestaltet, daß eine Ausgabeeinrichtung durch Aktivierung von Warnlampen ein Warnsignal ausgibt.

Besonders bevorzugt ist die Warnvorrichtung derart gestaltet, daß mehrere Warnlampen vorhanden sind und daß die Anzahl der leuchtenden Warnlampen ein Maß für die Annäherung einer Betriebskenngröße an den Gefahrenzustand ist.

Bei einer bevorzugten Warnvorrichtung sind eine Überwachungssendesignal-Empfangseinrichtung, eine Überwachungssendesignal-Vergleichseinrichtung und eine Ausgabeeinrichtung in einem Gehäuse angeordnet sind.

Besonders bevorzugt ist dieses Gehäuse mit einem Überwachungssendesignal-Empfangsteil der Warnvorrichtung mittels eines Armbandes am Handgelenk des Benutzers tragbar.

Vorzugsweise ist die Warnvorrichtung derart gestaltet, daß eine Überwachungssendesignal-Empfangseinrichtung und eine Ausgabeeinrichtung in eine Armbanduhr integriert sind.

Bei einer bevorzugten Warnvorrichtung sind eine Überwachungssendesignal-Empfangseinrichtung und eine Ausgabeeinrichtung an dem Gestell einer Brille angeordnet.

Eine bevorzugte Warnvorrichtung überwacht die kritischen Betriebskenngrößen eines Hubschraubers oder eines Flugzeuges oder eines Kraftfahrzeugs.

Weitere Vorteile, Merkmale und Anwendungsmöglichkeiten der Erfindung ergeben sich aus der nachfolgenden Beschreibung eines Ausführungsbeispiels in Zusammenhang mit den Figuren. Darin zeigen:
- Figur 1: eine schematisierte Funktionsdarstellung einer Warnvorrichtung mit einem Ausführungsbeispiel der erfindungsgemäßen Warneinrichtung;
- Figur 2: eine schematisierte Darstellung des Sendeteils des Ausführungsbeispiels gemäß Figur 1;
- Figur 3: eine schematische Darstellung der Funktionsmodi des Sendeteils des Ausführungsbeispiels gemäß Figur 1;
- Figur 4: eine schematische Darstellung der Codierung des Sendesignals des Ausführungsbeispiels gemäß Figur 1;
- Figur 5: eine schematisierte Darstellung des Aufbaus des Sendesignals im Normalbetrieb des Ausführungsbeispiels gemäß Figur 1;
- Figur 6: eine schematisierte Darstellung des Aufbaus des Sendesignals im Adreßänderungsmodus des Ausführungsbeispiels gemäß Figur 1;
- Figur 7: eine schematisierte Darstellung des Empfangsteils des Ausführungsbeispiels gemäß Figur 1;

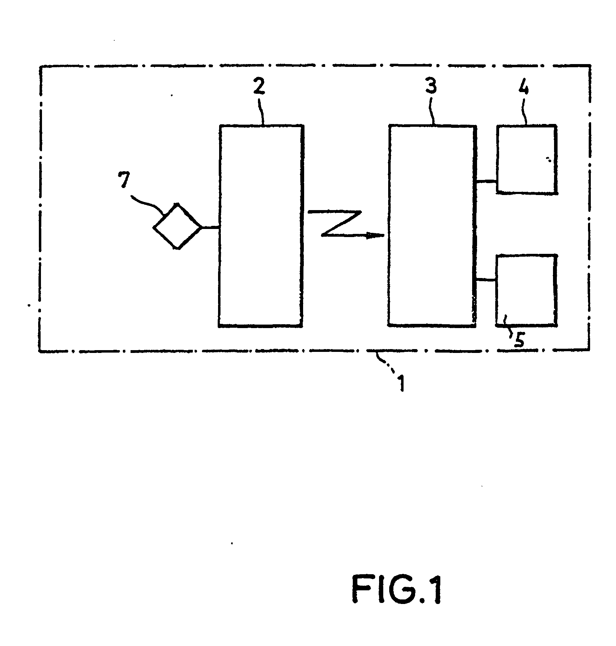

Das in bezug auf die Figuren 1 bis 7 erläuterte erste Ausführungsbeispiel der Erfindung ist dafür vorgesehen, das Getriebedrehmoment in einem Hubschrauber zu überwachen und ein Warnsignal auszugeben, falls das Getriebedrehmoment kritische Werte erreicht. Es kann ggf. jedoch auch zur Überwachung der Turbinentemperatur in Hubschraubern verwendet werden oder in anderen technischen Vorrichtungen und Gestaltungen eingesetzt werden, wie z. B. in Flugzeugen und Fluggeräten allgemein oder in Kraftfahrzeugen, Lastwagen, Maschinen und anderen Anlagen.

Die Figur 1 zeigt eine stark schematisierte Darstellung der Warnvorrichtung, die insgesamt mit 1 bezeichnet ist und die ein Sendeteil 2, welches die Sendeeinrichtung beinhaltet, und ein Empfangsteil 3, welches die Empfangseinrichtung enthält, aufweist.

Das Sendeteil 2 ist, beim vorliegenden Beispiel, fest im Cockpit des Hubschraubers angebracht (in den Figuren nicht dargestellt).

An dem Getriebe ist ein Drehmomentsensor 7 angeordnet, welcher das Getriebedrehmoment erfaßt.

Das Empfangsteil 3 wird bei der Benutzung im räumlichen Abstand zum Sendeteil 2 verwendet und ist mit einer Anzeigeeinrichtung 4 und einer Warneinrichtung 5 gekoppelt, die üblicherweise fest in das Gehäuse des Empfangsteils eingearbeitet sind.

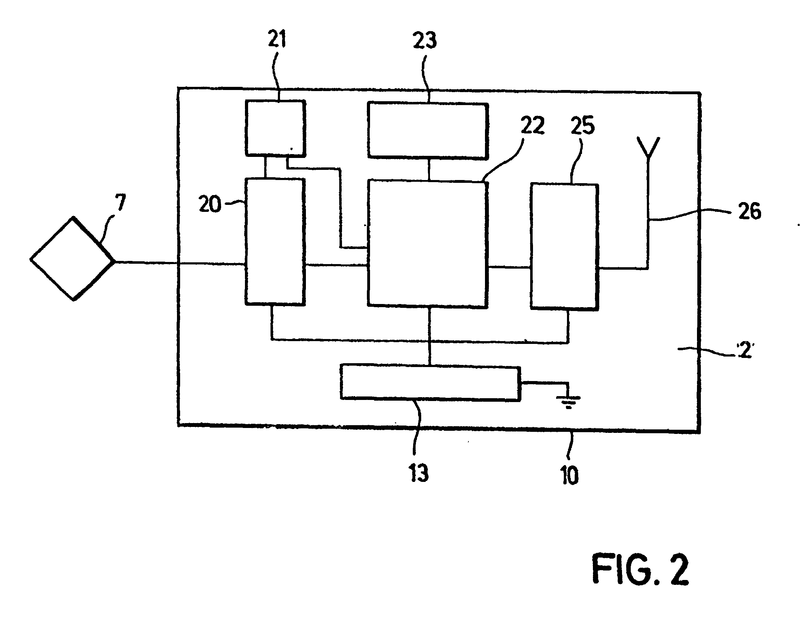

Das in Figur 2 schematisch dargestellte Sendeteil 2 weist ein Gehäuse 10 auf, in dem die elektrischen und elektronischen Bauelemente des Sendeteils angeordnet sind.

Im Gehäuse 10 ist ferner eine Batterie 13 untergebracht, die das Sendeteil mit elektrischer Energie versorgt. In einer nicht dargestellten Ausführungsform wird das Sendeteil durch die Energieversorgungseinrichtung des Hubschraubers mit elektrischer Energie versorgt.

Der Aufbau der elektrischen Komponenten des Sendeteils wird nun in bezug auf die Figur 2 beschrieben.

Der Drehmomentsensor 7 ist über elektrische Leitungen, die hier und im folgenden immer nur schematisch dargestellt sind, mit einer Signalaufbereitungsschaltung 20 verbunden. Als Drehmomentsensor können alle im Handel befindlichen Sensortypen verwendet werden.

Das analoge Signal des Drehmomentsensors wird in der Signalaufbereitungsschaltung 20 mittels eines A/D-Wandlers in ein digitales Signal umgewandelt. Die Signalaufbereitungsschaltung 20 ist weiterhin mit einem quarzgesteuerten Zeitgeber 21 verbunden, dessen Zweck nachfolgend erläutert wird. Das digital aufbereitete Signal wird einer handelsüblichen Mikroprozessor-Recheneinheit 22 zugeführt.

Die Mikroprozessor-Recheneinheit 22 ist mit einem Speicher 23 verbunden und empfängt ebenfalls die Signale des Zeitgebers 21. Der Speicher 23 (und der entsprechende Speicher im Empfangsteil) kann vollständig aus RAM-Speicherelementen aufgebaut sein. Es ist aber auch möglich, einen gemischten Speicher, bestehend aus ROM- (Festwertspeicher) und RAM-Speicherelementen zu verwenden. Da die Batteriespannung dauerhaft zur Verfügung steht, können die Speicherinhalte auch bei Verwendung von flüchtigen Speicherelementen langfristig gesichert werden.

Durch den Mikroprozessor 22 werden das Drucksignal sowie die anderen zu übertragenden Signale nach einem im Speicher 23 gespeicherten Programm in ein Sendesignal umgewandelt und einer Sendeausgangsstufe 25 zugeführt. Von der Sendeausgangsstufe 25 wird das Signal auf die Antenne 26, die aus einem mit Kupferdraht umwickelten Ferritkern besteht, übertragen.

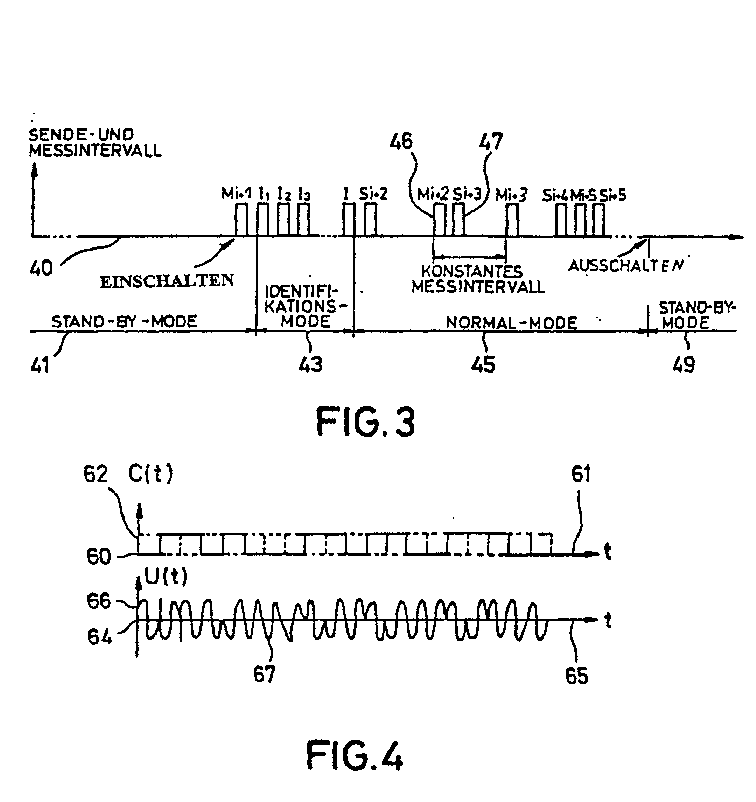

Verschiedene Betriebsarten der Sendeeinrichtung werden nun in bezug auf Figur 3 beschrieben, in der die verschiedenen Funktionsmodi des Sendeteils über der Zeitachse 40 aufgetragen sind.

Im Zeitabschnitt 41 im linken Teil der Figur befindet sich die Sendeeinrichtung im Stand-by-Modus.

Bei Start des Hubschraubers wird die Sendeeinrichtung vom Stand-by-Modus in den Sendemodus umgeschaltet. Nach dem Einschalten findet im Zeitabschnitt 43 zunächst ein sogenannter Adreß-Änderungsmodus oder Paarungsmodus statt, der später noch erläutert wird.

Dem Adreß-Änderungsmodus folgt der eigentliche Normalmodus im Zeitabschnitt 45, der die eigentliche Benutzungsphase des Gerätes darstellt. Wie in der Figur 3 schematisch dargestellt ist, wechseln sich in diesem Modus ein Meßintervall 46 und ein Sendeintervall 47 ab. Nach der Aufnahme jedes Meßwertes wird dann durch den Mikroprozessor das Sendesignal generiert und über die Sendeausgangsstufe 25 der Antenne 26 zugeleitet.

Das Startsignal für die Drehmomentmessung geht von dem Zeitgeber 21 der Sendeeinrichtung aus. Der Mikroprozessor 22 wird daraufhin aktiviert und das Drehmoment mittels des Drehmomentsensors 7 gemessen.

Der Zeitabstand zwischen der Drehmomentmessung und dem Aussenden des Signals ist nicht konstant, sondern wird durch den Mikroprozessor nach einem Zufallsverfahren innerhalb eines vorgegebenen Zeitbereiches variiert.

Die Aussendung des Signals erfolgt aber immer vor der Aufnahme des nächsten Meßwertes. Diese Zeitvariation bringt den Vorteil, daß bei zwei gleichzeitig in geringem Abstand betriebenen Warnvorrichtungen, die verschiedene Hubschrauber überwachen, eine Kollision von ausgesendeten Signalwerten nur zufällig erfolgen kann.

Wäre der Zeitabstand zwischen Meßintervall und Sendeintervall immer gleich, könnte die ungünstige Konstellation entstehen, daß die von zwei Sendeteilen ausgestrahlten Werte längere Zeit miteinander kollidieren.

Sobald der Hubschrauber ausgeschaltet wird, wird die Sendeeinrichtung in den Stand-by-Modus zurückgeschaltet, was im Zeitabschnitt 49 gezeigt ist.

Die Signalübertragung von der Sendeeinrichtung 2 zur Empfangseinrichtung 3 erfolgt mittels einer elektromagnetischen Funkwelle konstanter Frequenz. Zur Steuerung der Sendefrequenz dient ein handelsüblicher quarzgesteuerter Zeitgeber 21.

Die zu übertragenden Datensignale werden im Sendeteil 2 digital codiert, um die Störanfälligkeit der Datenübertragung zu verringern. Zur digitalen Übertragung der Werte gibt es im Stand der Technik verschiedene Verfahren, bei denen die Frequenz die Amplitude oder die Phasenlage des Trägers verändert werden.

Ein bekanntes Verfahren, welches auch für die Warnvorrichtung der gezeigten Art angewendet werden könnte, ist die Frequenzänderung des Sendesignals mit dem sogenannten "frequency shift keying". Bei diesem Verfahren werden den Bit-Informationsinhalten 0 und 1 unterschiedliche Frequenzen zugeordnet. Damit müssen jedoch zwei Frequenzen übertragen werden, was den Aufwand sender- und empfängerseitig erhöht.

Als beste Möglichkeit der Übertragung hat sich die Beeinflussung der Phasenlage mit dem sogenannten "phase shift keying" (PSK) erwiesen, wobei beim vorliegenden Ausführungsbeispiel noch eine besondere Variante des PSK-Verfahrens verwendet wird, nämlich das "differential phase shift keying" (DPSK).

Bei diesem Verfahren erfährt das Sendesignal einen Phasensprung, wenn eine 1 übermittelt wird; soll eine 0 gesendet werden, bleibt das Sendesignal unverändert. Da bei dieser Methode das erste Bit des übermittelten Bit-Musters eine Unsicherheit enthält, darf es nicht als Informationsträger dienen.

Ein Beispiel dieser digitalen Verschlüsselung ist in Figur 4 dargestellt. Dabei ist im Diagramm 60 über einer Zeitachse 61 und einer Zahlenachse 62 ein Bitmuster, bestehend aus den bits 011010011..., dargestellt.

Im Diagramm 64 ist über der gleich skalierten Zeitachse 65 und der Spannungsachse 66 ein Spannungssignal 67 aufgetragen, welches eine gleichbleibende Frequenz aufweist, dem aber durch die vorbeschriebene DPSK-Modulation das Bitmuster als Phasenänderung aufgeprägt ist.

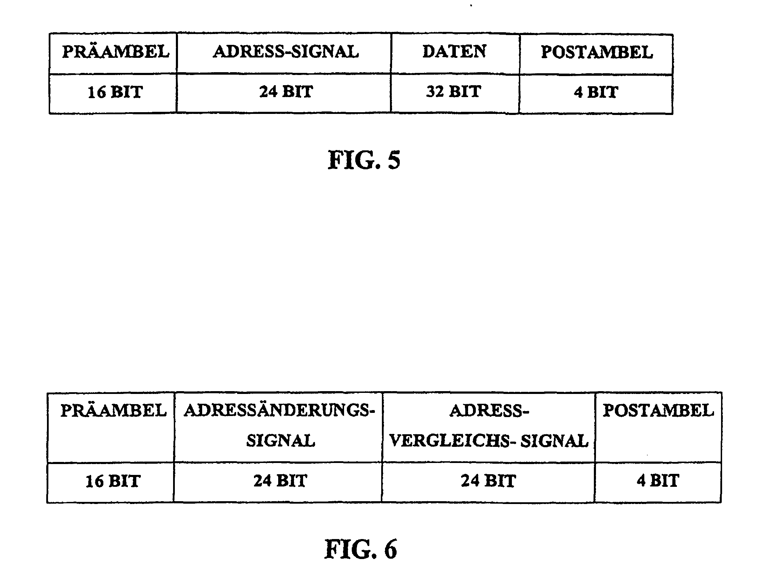

In Figur 5 wird ersichtlich, daß innerhalb jedes Sendeintervalls eine Signalfolge gesendet wird, welche aus einer Präambel, dem Adreßsignal, einem Datenblock und einer Postambel aufgebaut ist.

Die Präambel dient dazu, der Empfangseinrichtung die Synchronisation auf das gesendete Signal zu ermöglichen. Das Adreßsignal enthält die senderspezifische Identifizierung, an welches sich der eigentlich zu übertragende Datenblock anschließt. Der Datenblock enthält in jedem Fall das gemessene Drehmoment, kann aber bei einer bevorzugten Ausführungsform auch noch einen Temperaturwert enthalten, die über einen entsprechenden Temperatursensor erfaßt wird.

Selbstverständlich können auch noch weitere Daten übertragen werden, wenn dies im spezifischen Anwendungsfall von Interesse ist. Daran schließt sich die Postambel an, die unter anderem zur Fehlerkorrektur dient.

Beim dargestellten Ausführungsbeispiel umfaßt das Synchronisationsintervall 16 Bit, das Adreßsignal 24 Bit, der Datenblock 32 Bit und die Postambel 4 Bit und somit das gesamte Signal 76 Bit lang.

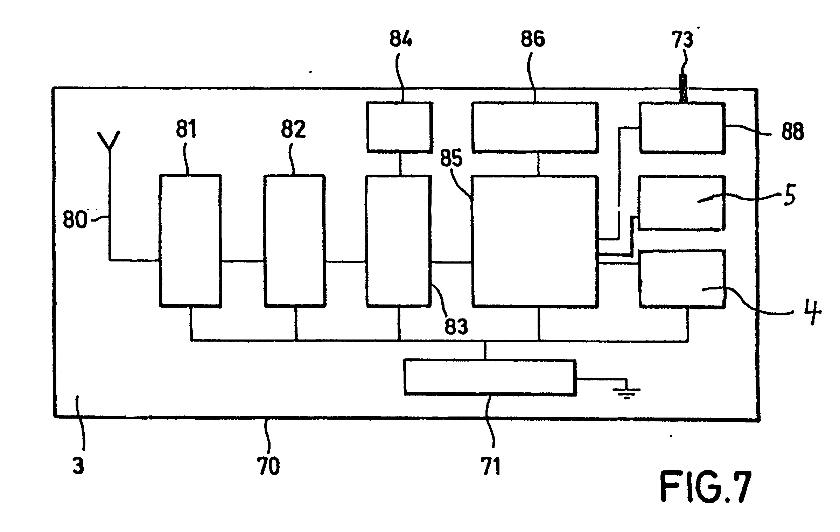

In bezug auf die Figur 7 wird nun der Aufbau des Empfangsteils beschrieben.

Das Empfangsteil 3 ist, getrennt von dem Sendeteil, in einem Gehäuse 70 untergebracht und weist keine Verbindung mechanischer Art oder mittels elektrischer Leitungen mit dem Sendeteil 2 auf. Das Gehäuse 70 enthält eine Batterie 71, um die elektrischen und elektronischen Komponenten mit Energie zu versorgen.

Am Gehäuse 70 ist ferner ein flexibles Armband (nicht dargestellt) angeordnet, welches es dem Benutzer ermöglicht, das Empfangsteil wie eine Armbanduhr am Handgelenk zu befestigen.

Um das Gerät in Betrieb setzen zu können und um im Paarungsmodus die Zuordnung zu bestätigen, ist im Gehäuse ein Bestätigungsschalter 73 eingelassen, welcher vom Benutzer z. B. mit seinen Fingern betätigt werden kann, was vom Empfangsteil unter bestimmten Umständen als Schaltereignis interpretiert wird.

Das Empfangsteil weist eine Ferritantenne 80 auf, wie schematisch in der Figur dargestellt ist. Das empfangene Signal wird zunächst einer Signalverarbeitungs- und -verstärkungsstufe 81 zugeführt, an die sich eine Digitalisierungstufe 82 anschließt. Beide Bauteile entsprechen üblicher Bauart.

Das digitale Signal wird einem Vergleicher 83 zugeführt, welcher feststellt, ob das empfangene und aufbereitete Signal das Adreßsignal oder das Adreß-Steuersignal enthält.

Ist dies der Fall, wird das Signal einem Mikroprozessor 85 zugeführt, der über ein in einem Speicher 86 abgelegtes Programm gesteuert wird und die weitere Verarbeitung übernimmt.

Die Verwendung der vorgeschalteten Vergleichsstufe hat den Vorteil, daß der Mikroprozessor 85 nur dann mit dem Signal beaufschlagt wird, wenn feststeht, daß die individuelle Empfangseinrichtung angesprochen ist.

Die Zeitsteuerung des Empfangsteils erfolgt über einen Zeitgeber 84.

Die aus dem empfangenen Signal abgeleiteten Daten sowie ggf. weitere Daten werden im Display 87 dem Benutzer angezeigt. Das Display 87 ist dazu hinter einem durchsichtigen Bereich in der Wand des Gehäuses 70 des Empfangsteils 2 angeordnet. Auf dem Display wird das im Getriebe herrschende Drehmoment und ggf. auch die Turbinentemperatur angezeigt.

Die jeweiligen Daten werden im Display so lange angezeigt, bis nach einer erneuten Messung und der Übertragung der Werte neue Daten ermittelt sind.

Die Empfangseinrichtung weist ferner eine nur schematisch dargestellte Schalteinrichtung 88 mit dem bereits erwähnten Taster 73 auf.

Nachfolgend wird nun beschrieben, wie die Zuordnung oder die Paarung von Sendeteil und Empfangsteil innerhalb des Adreßänderungsmodus vorgenommen wird.

Wie bereits dargelegt, wird jedem Sendeteil bei der Herstellung ein Adreßsignal fest zugeordnet, welches nur einmal vergeben wird. Beim vorstehenden Ausführungsbeispiel wird dabei ein 24 Bit-Signal verwendet, woraus sich insgesamt 16,7 Millionen verschiedene Adressierungsmöglichkeiten ergeben. Durch diese hohe Zahl ist sichergestellt, daß niemals zwei Sendeteile mit gleichem Signal existieren.

Das Adreßsignal des Sendeteils wird in einem Festwertspeicherbereich des Speichers 23 des Sendeteils 2 abgelegt. Es ist auch möglich, das Adreßsignal in einem RAM-Speicherbereich abzulegen; in diesem Fall muß aber das Signal z. B. durch die gleichzeitige Verwendung als Herstellernummer oder ähnlichem im Gerät anderweitig fixiert sein, damit das Signal beim Batteriewechsel wieder korrekt eingelesen werden kann.

Der Adreßänderungsmodus wird jedesmal gestartet, wenn das Sendeteil in Betrieb genommen wird. Dies geschieht, wie vorstehend erläutert, vorzugsweise durch ein festgelegtes Einschaltkriterium, z. B. das Starten des Hubschraubers. Das Sendeteil geht dann in den Adreßänderungsmodus über und sendet, wie in Figur 6 dargestellt, ein Signal, welches aus einer Präambel, einem Adreß-Steuersignal, dem eigentlichen Adreßsignal und einer Postambel besteht. Beim Ausführungsbeispiel sind die Präambeln 16 Bit, die Postambeln 4 Bit und das Adreß-Steuersignal sowie das Adreßsignal jeweils 24 Bit lang.

Das Adreß-Steuersignal wird von allen Empfangsteilen der entsprechenden Baureihen verstanden. Sobald ein Empfangsteil dieses Signal empfängt, wird es über den Mikroprozessor in den Adreßänderungsmodus umgeschaltet. Der Prozessor fragt dann über das Display an, ob das Adreßsignal des Sendeteils übernommen werden soll. Wird dies vom Prozessor über die Schalteinrichtung 88 mittels des Tasters 73 bestätigt, wird das Adreßsignal des Sendeteils übernommen und im Speicher 86 als Adreßvergleichssignal abgespeichert.

Das im Speicher 86 gespeicherte Steuerprogramm des Empfangsteils kann so gestaltet werden, daß das Empfangsteil, sobald es das Adreß-Steuersignal des Sendeteils im Adreßänderungsmodus empfängt, überprüft, ob sein abgespeichertes Adreßvergleichssignal mit dem Adreßsignal des Sendeteils übereinstimmt. Wenn dies der Fall ist, kann das Empfangsteil dann anzeigen, daß es auf dieses Sendeteil eingestellt ist, so daß der Benutzer weiß, daß die beiden Geräte einander zugeordnet sind.

Um eine versehentliche Zuordnung von Geräten zu vermeiden, weist der Adreßänderungsmodus beim Ausführungsbeispiel mehrere Sicherheitsstufen auf.

Die erste Stufe ist die Kopplung des Beginns des Adreßänderungsmodus an das Einschaltkriterium des Sendeteils. Die Adreßänderung wird immer nur unmittelbar nach Auftreten des Einschaltkriteriums vorgenommen. Damit wird zuverlässig verhindert, daß eine Adreßänderung während der normalen Benutzung der Geräte gestartet wird.

Als zweite Sicherheitsstufe wird vom Empfangsteil mit einer entsprechenden Einrichtung eine Energiemessung des im Adreßänderungsmodus empfangenen Signals durchgeführt. Das Programm des Empfangsteils ist also so gestaltet, daß immer dann, wenn das Adreß-Steuersignal empfangen wird, eine Energiemessung des Gesamtsignals durchgeführt wird. Nur wenn die Sendeenergie einen bestimmten Grenzwert überschreitet, ist eine Zuordnung möglich.

Bekannterweise hängt die Übertragung der Energie vom Sende- zum Empfangsteil vom Abstand und, in erheblichem Maße, auch von der jeweiligen Ausrichtung der beiden Antennen zueinander ab. Nur wenn die Geräte räumlich und winkelmäßig in bestimmter Weise zueinander angeordnet sind, wird die vom Empfangsteil aufgenommene Energie maximal hoch. Der Grenzwert für die Energiemessung wird deshalb so gewählt, daß eine Zuordnung nur stattfinden kann, wenn Sende- und Empfangsteil in kleinem Abstand zueinander angeordnet sind und zudem eine vorgegebene winkelmäßige Ausrichtung zueinander aufweisen.

Um die winkelmäßige Zuordnung zu erleichtern, werden die Antennen von Sende- und Empfangsteil vorzugsweise so im jeweiligen Gehäuse angeordnet, daß sich die maximale Energie bei einer parallelen oder T-förmigen Anordnung der Geräte zueinander ergibt.

Um auch hier Zufälligkeiten auszuschließen, wird das Aussenden des Adreß-Steuersignals mehrfach wiederholt und nur dann von einer ausreichenden Signalenergie ausgegangen, wenn der gemessene Wert bei einem bestimmten prozentualen Anteil der Aussendungen über dem Grenzwert liegt.

Schließlich muß der Benutzer noch, und dies stellt die nächste Sicherheitsstufe dar, die Schalteinrichtung 88 betätigen, um die Adreßänderung zu bestätigen.

Eine Zuordnung findet also nur dann statt, wenn
1. Sende- und Empfangsteil praktisch unmittelbar nebeneinander in definierter Winkellage angeordnet sind;
2. in diesem Zustand der Hubschrauber gestartet wird; und
3. die Identifikation durch den Benutzer manuell betätigt wird.

In Abhängigkeit von dem gemessenen Drehmoment wird von dem Mikroprozessor 85 die Warneinrichtung mit einem Signal beaufschlagt.

In der dargestellten bevorzugten Ausführungsform ist die Warneinrichtung 5 mit dem Gehäuse des Empfangsteils 70 fest verbunden. Ab einem vorbestimmten ersten Grenzdrehmoment wird die Warneinrichtung 5 von dem Prozessor 85 mit einem Signal beaufschlagt, welches um so stärker wird, je größer das gemessene Drehmoment wird.

Korrelierend mit der Größe des Signals, welches die Warneinrichtung 5 vom Prozessor 85 erhält, erzeugt die Warneinrichtung 5 Vibrationen, die auf das Gehäuse 70 des Empfangsteils und somit auf den Arm des Benutzers übertragen wird. Der Benutzer registriert die Vibrationen der Empfangseinrichtung an seinem Handgelenk auch, wenn er durch andere Sinneseindrücke wie Gespräche mit dem Tower oder andere schwierige Aufgaben abgelenkt ist. So wird der Benutzer zuverlässig vor einer Überlastung des Getriebes gewarnt.

### Bezugszeichenliste

- 1: Warnvorrichtung
- 2: Sendeteil
- 3: Empfangsteil
- 4: Anzeigeeinrichtung
- 5: Warneinrichtung
- 7: Drehmomentsensor
- 10: Gehäuse
- 13: Batterie
- 20: Signalaufbereitungsschaltung
- 21: Zeitgeber der Sendeeinrichtung
- 22: Mikroprozessor-Recheneinheit
- 23: Speicher
- 25: Sendeausgangsstufe
- 26: Antenne
- 40: Zeitachse
- 41: Zeitabschnitt
- 43: Zeitabschnitt
- 45: Zeitabschnitt
- 46: Meßintervall
- 47: Sendeintervall
- 49: Zeitabschnitt
- 60: Diagramm
- 61: Zeitachse
- 62: Zahlenachse
- 64: Diagramm
- 65: Zeitachse
- 66: Spannungsachse
- 67: Spannungssignal
- 70: Gehäuse des Empfangsteils
- 71: Batterie
- 73: Taster
- 80: Ferritantenne
- 81: Signalverarbeitungs- und -verstärkungsstufe
- 82: Digitalisierungstufe
- 83: Vergleicher
- 84: Zeitgeber
- 85: Mikroprozessor
- 86: Speicher

## Patentansprüche

1. Warnvorrichtung (1) für Gefahrenzustände, insbesondere für Helikopter, mit:
einer Signal-Aufnahmeeinrichtung (20), zur Aufnahme und Verarbeitung eines Betriebszustands-Signals;
einer Signal-Vergleichseinrichtung, welche das aufgenommene Betriebszustands-Signal mit einem vorbestimmten Kriterium vergleicht;
einer Überwachungssignal-Generierungseinrichtung (22), welche ein Überwachungssignal erzeugt, wenn das Betriebszustands-Signal dieses Kriterium erfüllt;
einer Überwachungssendesignal-Übertragungseinrichtung (25), welche das erzeugte Überwachungssignal auf drahtlosem Wege ausstrahlt;
einer Überwachungssendesignal-Empfangseinrichtung (81), welche dieses ausgestrahlte Überwachungssendesignal empfängt;
einer Überwachungssendesignal-Vergleichseinrichtung (83), welche prüft, ob dieses empfangene Überwachungssendesignal vorgegebene Überwachungssendesignal-Kriterien erfüllt; und
einer Ausgabeeinrichtung (88), welche ein Ausgabesignal ausgibt, wenn dieses Überwachungssendesignal diese Kriterien erfüllt,
**dadurch gekennzeichnet, daß**
diese Empfangseinrichtung (81), diese Überwachungssendesignal-Vergleichseinrichtung (83) und diese Ausgabeeinrichtung (88) dazu geeignet sind, von einem Benutzer getragen zu werden und dieses Ausgabesignal unmittelbar vom Benutzer wahrnehmbar ist.

2. Warnvorrichtung für Gefahrenzustände nach Anspruch 1 ,
**dadurch gekennzeichnet, daß** bei wenigstens einem der Übertragungswege zwischen einem Sensor (7), Überwachungssignal-Generierungseinrichtung (22) und Ausgabeeinrichtung (88) eine drahtlose Datenübertragung verwendet wird.

3. Warnvorrichtung für Gefahrenzustände nach einem der vorhergehenden Ansprüche,
**dadurch gekennzeichnet, daß** die Überwachungssendesignal-Übertragungseinrichtung (25) eine Steuereinrichtung (21) aufweist, welche bewirkt, daß die Signale in Intervallen übertragen werden,
die Überwachungssendesignal-Übertragungseinrichtung (25) eine Überwachungssendesignal-Generierungseinrichtung aufweist, welche ein Adreßsignal generiert, das für die individuelle Überwachungssendesignal-Übertragungseinrichtung charakteristisch ist und diese eindeutig identifiziert,
eine Steuereinrichtung (21) bewirkt, daß dieses Adreßsignal zumindest einmal in jedem Übertragungsintervall übertragen wird,
die Ausgabeeinrichtung (88) einen Speicher aufweist, in dem ein der zugehörigen individuellen Überwachungssendesignal-Übertragungseinrichtung (25) zugeordnetes Adreß-Vergleichssignal abgespeichert ist, und
die Ausgabeeinrichtung (88) eine Vergleichseinrichtung aufweist, welche prüft, ob das von der Überwachungssendesignal-Übertragungseinrichtung ausgestrahlte Adreßsignal mit dem in der Ausgabeeinrichtung (88) gespeicherten Adreß-Vergleichssignal übereinstimmt, und
eine Weiterleitung bzw. eine Weiterverarbeitung der von der Ausgabeeinrichtung (88) aufgenommenen Signale nur dann erfolgt, wenn das von der Ausgabeeinrichtung (88)
empfangene und das in der Ausgabeeinrichtung (88) gespeicherte Adreß-Vergleichssignal identisch sind.

4. Warnvorrichtung für Gefahrenzustände nach einem der vorhergehenden Ansprüche,
**dadurch gekennzeichnet, daß** eine Umwandlungseinrichtung vorgesehen ist, die die von der Überwachungssendesignal-Übertragungseinrichtung zu übertragenden Signale digital kodiert.

5. Warnvorrichtung für Gefahrenzustände nach einem der Ansprüche 3 oder 4,
**dadurch gekennzeichnet, daß** das Adreßsignal in der Überwachungssendesignal-Übertragungseinrichtung als digitale Zahlenfolge mit n-Bits abgespeichert ist und daß das Adreß-Vergleichssignal im Empfänger ebenfalls als digitale Zahlenfolge mit n-Bits abgespeichert ist.

6. Warnvorrichtung für Gefahrenzustände nach einem der Ansprüche 3-5,
**dadurch gekennzeichnet, daß** das in der Überwachungssendesignal-Übertragungseinrichtung (25) abgespeicherte Adreßsignal und/oder das in der Ausgabeeinrichtung (88) abgespeicherte Adreß-Vergleichssignal veränderbar ist bzw. sind, und das Adreßsignal und/oder das Adreß-Vergleichssignal von Überwachungssendesignal- und/oder Übertragungs-Einrichtung einander anzupassen.

7. Warnvorrichtung für Gefahrenzustände nach Anspruch 6,
**dadurch gekennzeichnet, daß** durch die Überwachungssendesignal-Generierungseinrichtung der Überwachungssendesignal-Übertragungseinrichtung (25) ein Adreß-Steuersignal generiert wird, daß im Speicher der Ausgabeeinrichtung (88) ein Adreß-Steuervergleichssignal abgespeichert ist, und daß die Vergleichseinrichtung die Ausgabeeinrichtung (88) in einen Adreßsignal-Änderungsmodus umschaltet, sobald die Vergleichseinrichtung erkennt, daß ein von der Überwachungssendesignal-Übertragungseinrichtung (25) ausgestrahltes Adreß-Steuersignal mit dem in der Ausgabeeinrichtung (88) gespeicherten Adreß-Steuervergleichssignal identisch ist.

8. Warnvorrichtung für Gefahrenzustände nach Anspruch 7,
**dadurch gekennzeichnet, daß** die Überwachungssendesignal-Übertragungseinrichtung (25) eine erste Detektoreinrichtung aufweist, welche das Auftreten einer vorgegebenen Bedingung kennt und eine Umschaltung der Überwachungssendesignal-Übertragungseinrichtung nach einem Übertragungsmodus, in dem zumindest Zustands- und Adreßsignal ausgestrahlt werden, in einen Adreßsignal-Änderungsmodus, in dem ein Adreß-Steuersignal und das Adreßsignal ausgestrahlt werden, bewirkt.

9. Warnvorrichtung für Gefahrenzustände nach einem der Ansprüche 7 oder 8,
**dadurch gekennzeichnet, daß** die Ausgabeeinrichtung (88) eine Empfangsenergie-Meßeinrichtung aufweist, mit welcher die Energie des von der Überwachungssendesignal-Übertragungseinrichtung empfangenen Signals zumindest dann gemessen wird, wenn die Vergleichseinrichtung feststellt, daß ein von der Überwachungssendesignal-Übertragungseinrichtung übertragenes Adreß-Steuersignal mit dem in der Ausgabeeinrichtung (88) abgespeicherten Adreß-Steuervergleichssignal identisch ist.

10. Warnvorrichtung für Gefahrenzustände nach einem der Ansprüche 7 bis 9,
**dadurch gekennzeichnet, daß** die Ausgabeeinrichtung eine manuell betätigbare Schalteinrichtung (73) aufweist und daß ein während des Adreß-Änderungsmodus empfangenes Adreßsignal von der Ausgabeeinrichtung nur dann abgespeichert wird, wenn diese manuelle Schalteinrichtung (73) betätigt wird.

11. Warnvorrichtung für Gefahrenzustände nach einem der Ansprüche 7 bis 10,
**dadurch gekennzeichnet, daß** die Ausgabeeinrichtung (88) ein während des Adreß-Änderungsmodus empfangendes Adreßsignal nur abspeichert, wenn die Energie des empfangenen Signals über einem bestimmten, vorgegebenen Wert liegt, und wenn die Schalteinrichtung (73) betätigt wird.

## Claims

1. Warning device (1) for indicating dangerous circumstances, especially for helicopters, having:
a signal receiving means (20) for receiving and processing an operational status signal;
a signal comparison means which compares the received operational status signal against predefined criterion;
a monitoring signal generating means (22) which generates a monitoring signal when said operational status signal meets said criterion;
a monitoring transmission signal transmitting means (25) which wirelessly emits said generated monitoring signal;
a monitoring transmission signal receiving means (25) which receives said emitted monitoring transmission signal;
a monitoring transmission signal comparison means (83) which analyzes whether said received monitoring transmission signal meets predefined monitoring transmission signal criteria; and
an output means (88) which emits an output signal when said monitoring transmission signal meets said criteria,
whereby said receiving means (81), said monitoring transmission signal comparison means (83) and said output means (88) can be worn by a user and said output signal is immediately perceivable by the user.

2. Warning device for indicating dangerous circumstances according to one of the preceding claims, **characterized in that**
wireless data transmission is employed for at least one of the paths of transmission between sensor (17), monitoring signal generating means (22), and output means (88).

3. Warning device for indicating dangerous circumstances according to one of the preceding claims, **characterized in that**
said monitoring transmission signal transmitting means (25) comprises a control means (21) which induces the signals to be transmitted at intervals,
said monitoring transmission signal transmitting means (25) comprises a monitoring transmission signal generating means which generates an address signal which is characteristic of the individual monitoring transmission signal transmitting means and which uniquely identifies same,
said control means (21) induces that said address signal is transmitted at least once during each transmission interval,
said output means (88) comprises a memory in which an address comparison signal allocated to the respective individual monitoring transmission signal transmitting means (25) is stored, and
said output means (88) comprises a comparison means which analyses whether the address signal emitted from the monitoring transmission signal transmitting means concurs with the address comparison signal stored in the output means (88), and
a forwarding or further processing of signals received by said output means (88) only ensues when the signal received by said output means (88) and the address comparison signal stored in said output means (88) are identical.

4. Warning device for indicating dangerous circumstances according to one of the preceding claims, **characterized in that**
a conversion means is provided which digitally codes the signal to be transmitted by said monitoring transmission signal transmitting means.

5. Warning device for indicating dangerous circumstances according to one of the preceding claims, **characterized in that**
said address signal is stored in the monitoring transmission signal transmitting means as a digital sequence of numbers having *n* bits and that the address comparison signal is likewise stored in the receiver as a digital sequence of numbers having *n* bits.

6. Warning device for indicating dangerous circumstances according to one of
claims 3 - 5, **characterized in that**
said address signal stored in the monitoring transmission signal transmitting means (25) and/or said address comparison signal stored in said output means (88) is/are variable to modulate said address signal and/or address comparison signal of said monitoring transmission signal and/or transmitting means to one another.

7. Warning device for indicating dangerous circumstances according to claim 6,
**characterized in that**
the monitoring transmission signal generating means of said monitoring transmission signal transmitting means (25) generates an address control signal; that an address control comparison signal is stored in the memory of the output means (88); and that the comparison means switches said output means (88) to an address signal change mode as soon as the comparison means recognizes that an address control signal emitted by the monitoring transmission signal transmitting means is identical to the address control comparison signal stored in the output means (88).

8. Warning device for indicating dangerous circumstances according to claim
7, **characterized in that**
said monitoring transmission signal transmitting means (25) comprises a first detection means which recognizes the occurrence of a predefined criterion and induces the switching of the monitoring transmission signal transmitting means from a transmission mode in which at least status and address signal are emitted to an address change mode in which an address control signal and the address signal are emitted.

9. Warning device for indicating dangerous circumstances according to one of claims 7 or 8, **characterized in that**
said output means (88) comprises a received energy measurement means which measures the energy of the signal received by the monitoring transmission signal transmitting means at least upon instance of the comparison means establishing that an address control signal transmitted by the monitoring transmission signal transmitting means is identical with the address control comparison signal stored in the output means (88).

10. Warning device for indicating dangerous circumstances according to one of claims 7 - 9, **characterized in that**
said output means comprises a manually actuatable circuit means (73) and that an address signal received during address change mode will only be filed in the output means when said manually actuatable circuit means (73) is activated.

11. Warning device for indicating dangerous circumstances according to one of claims 7 - 10, **characterized in that**
said output means (88) only files an address signal received during address change mode when the energy of the received signal is above a predetermined defined value and when said circuit means (73) is activated.

## Revendications

1. Dispositif (1) d'avertissement d'états de danger, notamment pour des hélicoptères, comportant:
un dispositif (20) d'enregistrement de signaux pour enregistrer et traiter un signal d'état de fonctionnement;
un dispositif de comparaison de signaux, qui compare le signal enregistré d'état de fonctionnement à un critère prédéterminé;
un dispositif (22) de production de signal de contrôle, qui produit un signal de contrôle lorsque le signal d'état de fonctionnement satisfait à ce critère;
un dispositif (25) de transmission de signal d'émission de contrôle, qui émet sans fil le signal de contrôle produit;
un dispositif (81) de réception de signal d'émission de contrôle, qui reçoit ce signal d'émission de contrôle émis;
un dispositif (83) de comparaison de signal d'émission de contrôle, qui vérifie si ce signal d'émission de contrôle reçu satisfait à des critères prédéterminés pour le signal d'émission de contrôle; et
un dispositif de sortie (88), qui délivre un signal de sortie lorsque ce signal d'émission de contrôle satisfait à ces critères,
**caractérisé en ce que**
ce dispositif d'émission (81), ce dispositif (83) de comparaison du signal d'émission de contrôle et ce dispositif de sortie (88) sont appropriés pour être portés par un utilisateur, et ce signal de sortie peut être décelé directement par l'utilisateur.

2. Dispositif d'avertissement d'états de danger selon la revendication 1, **caractérisé en ce que** dans le cas d'au moins une des voies de transmission entre un capteur (7), le dispositif (22) de production de signal de contrôle et le dispositif de sortie (88), on utilise une transmission de données sans fil.

3. Dispositif d'avertissement d'états de danger selon l'une des revendications précédentes, **caractérisé en ce que** le dispositif (25) de transmission de signal d'émission de contrôle comporte un dispositif de commande (21), qui agit de telle sorte que les signaux sont transmis dans des intervalles,
que le dispositif (25) de transmission de signal d'émission de contrôle comporte un dispositif de production de signaux d'émission de contrôle, qui produit un signal d'adresse qui est caractéristique pour le dispositif individuel de transmission de signal d'émission de contrôle et identifie de façon nette ce dispositif,
qu'un dispositif de commande (21) agit de telle sorte que ce signal d'adresse est transmis au moins une fois pendant chaque intervalle de transmission,
que le dispositif de sortie (88) possède une mémoire, dans laquelle est mémorisé un signal de comparaison d'adresse, associé au dispositif individuel associé (25) de transmission de signal d'émission de contrôle, et
que le dispositif de sortie (88) comporte un dispositif comparateur qui vérifie si le signal d'adresse émis par le dispositif de transmission de signal d'adresse de contrôle, concorde avec le signal de comparaison d'adresse mémorisé dans le dispositif de sortie (88), et
qu'une retransmission ou un traitement aval du signal reçu par le dispositif de sortie (88) est exécuté uniquement lorsque le signal de comparaison d'adresse, reçu par le dispositif de sortie (88) et le signal de comparaison d'adresse mémorisé dans le dispositif de sortie (88) sont identiques.

4. Dispositif d'avertissement d'états de danger selon l'une des revendications précédentes, **caractérisé en ce qu'**il est prévu un dispositif de conversion, qui code numériquement les signaux devant être transmis par le dispositif de transmission de signaux d'émission de contrôle.

5. Dispositif d'avertissement d'états de danger selon l'une des revendications 3 ou 4,
**caractérisé en ce que** le signal d'adresse est mémorisé dans le dispositif de transmission de signal d'émission de contrôle sous la forme d'une suite numérique de chiffres comportant n bits et que le signal de comparaison d'adresse est mémorisé, dans le récepteur, également sous la forme d'une suite numérique de chiffres comportant n bits.

6. Dispositif d'avertissement d'états de danger selon l'une des revendications 3 à 5,
**caractérisé en ce que** le signal d'adresse mémorisé dans le dispositif (25) de transmission de signaux d'émission de contrôle et/ou le signal de comparaison d'adresse mémorisé dans le dispositif de sortie (88) est/sont modifiable(s) pour adapter entre eux le signal d'adresse et/ou le signal de comparaison d'adresse du dispositif de transmission de signal d'émission de contrôle et/ou le dispositif de transmission.

7. Dispositif d'avertissement d'états de danger selon la revendication 6, **caractérisé en ce qu'**un signal de commande d'adresse est produit par le dispositif de production de signal d'adresse de contrôle du dispositif (25) de transmission du signal d'émission de contrôle, qu'un signal de comparaison de commande d'adresse est mémorisé dans la mémoire du dispositif de sortie (88) et que le dispositif de comparaison commute le dispositif de sortie (88) dans un mode de modification du signal d'adresse, dès que le dispositif comparateur identifie qu'un signal de commande d'adresse émis par le dispositif (25) de transmission du signal d'émission de contrôle est identique au signal de comparaison de commande d'adresse, mémorisé dans le dispositif de sortie (88).

8. Dispositif d'avertissement d'états de danger selon la revendication 7, **caractérisé en ce que** le dispositif (25) de transmission de signal d'émission de contrôle comporte un premier dispositif de détection, qui identifie l'apparition d'une condition prédéterminée et déclenche une commutation du dispositif de transmission de signaux d'émission de contrôle depuis un mode de transmission, dans lequel au moins un signal d'état et un signal d'adresse sont émis, dans un mode de modification du signal d'adresse, dans lequel un signal de commande d'adresse et le signal d'adresse sont émis.

9. Dispositif d'avertissement d'états de danger selon l'une des revendications 7 ou 8, **caractérisé en ce que** le dispositif de sortie (88) possède un dispositif de mesure de l'énergie de réception, à l'aide duquel l'énergie du signal reçu par le dispositif de transmission du signal d'émission de contrôle est mesurée au moins lorsque le dispositif comparateur établit que le signal de commande d'adresse, transmis par le dispositif de transmission du signal d'émission de contrôle, est identique au signal de comparaison de commande d'adresse mémorisé dans le dispositif de sortie (88).

10. Dispositif d'avertissement d'états de danger selon l'une des revendications 7 à 9,
**caractérisé en ce que** le dispositif de sortie comporte un dispositif de commutation (73) pouvant être actionné manuellement et qu'un signal d'adresse reçu pendant le mode de modification d'adresse est mémorisé par le dispositif de sortie uniquement lorsque ce dispositif de commutation manuel (73) est actionné.

11. Dispositif d'avertissement d'états de danger selon l'une des revendications 7 à 10, **caractérisé en ce que** le dispositif de sortie (88) mémorise un signal d'adresse reçu pendant le mode de modification d'adresse, uniquement lorsque l'énergie du signal reçu est supérieure à une certaine valeur prédéterminée et que le circuit de commutation (73) est actionné.
